Europäisches Patentamt

European Patent Office

Office européen des brevets

(11) Publication number: **0 037 608**

**B1**

(12) **EUROPEAN PATENT SPECIFICATION**

(45) Date of publication of patent specification: **13.03.85**

(51) Int. Cl.⁴: **C 08 L 25/12, C 08 L 33/20**

(21) Application number: **81200355.6**

(22) Date of filing: **31.03.81**

(54) Polymer composition.

(30) Priority: **04.04.80 NL 8002023**
**30.07.80 NL 8004377**

(43) Date of publication of application:
**14.10.81 Bulletin 81/41**

(45) Publication of the grant of the patent:
**13.03.85 Bulletin 85/11**

(84) Designated Contracting States:
**AT BE CH DE FR GB IT LI NL SE**

(56) References cited:
**DE-A-2 235 052**
**FR-A-2 197 029**
**US-A-3 658 950**

**CHEMICAL ABSTRACTS, vol. 81, 1974, page 93,**
**no. 154021s Columbus, Ohio, U.S.A.**

(73) Proprietor: **STAMICARBON B.V.**
**Postbus 10**
**NL-6160 MC Geleen (NL)**

(72) Inventor: **Schepers, Herman Augustinus J.**
**Leentstraat 33**
**NL-6171 LC Stein (NL)**

(74) Representative: **Hatzmann, Marinus Jan et al**
**OCTROOIBUREAU DSM P.O.Box 9**
**NL-6160 MA Geleen (NL)**

Courier Press, Leamington Spa, England.

# 0 037 608

**Description**

The invention relates to an impact resistant polymer composition comprising

a. 50—95 parts by weight of one or more polymers obtained by the polymerization of 10—90% by weight of styrene and/or derivatives of styrene and 90—10% by weight of acrylonitrile and/or methacrylonitrile

b. 5—50 parts by weight of

b.1 a largely saturated rubber

b.2 chlorinated polyethylene, while the weight ratio of rubber to chlorinated polyethylene is between 2:1 and 1:10.

Generally, an impact resistant polymer composition based on an unsaturated nitrile contains a graft polymer consisting of a rubber with, grafted on it, one or more monomers, such as styrene, $\alpha$-methylstyrene, acrylonitrile, vinylchloride, maleic anhydride and/or one or more acrylates. A typical example of such a polymer composition is ABS (graft copolymer of styrene and acrylonitrile on a (butadiene) rubber). Thanks to the grafting, on the rubber, of a part of the monomers forming the continuous phase (matrix) of the polymer composition, these compositions have a high impact resistance, even at low temperatures (—20°C).

As rubber, polybutadiene or a rubber related thereto is often used. These rubbers show a high degree of unsaturation in the main chain, so that they are sensitive to oxidation under influence of light and/or molecular oxygen. Owing to this, the physical and mechanical properties of objects made from such polymer compositions will strongly deteriorate so that they cannot be used, per se, for outdoor applications.

In order to solve this problem, it has been suggested to replace the rubber in the polymer composition by a largely saturated rubber, such as an ethylene-propylene rubber or an ethylene-propylene diene rubber. For this purpose see, for instance, the Dutch patent application 7104841 or 7809633 laid open to public inspection.

Thus a polymer composition combining a good impact resistance with a good UV stability is obtained.

A disadvantage, however, is that these graft copolymers show a rather poor flow behaviour, so that the processing speed is low and, particularly with complicated articles, problems may arise in respect of the filling of the mould. Compared with mixtures of polymers, these graft copolymers also require a rather complicated production process.

In a comparative example in the German Auslegeschrift 2235052 a polymer composition has been described consisting of 73 parts by weight of styrene-acrylonitrile copolymer, 27 parts by weight of a chlorinated polyethylene with a chlorine content of 30% and 5 parts by weight of ethylene-propylene-norbornene terpolymer. As appears from the text of the application, this polymer composition lacks in impact resistance and tensile strength.

The purpose of the invention is to provide an impact resistant polymer composition which does not show the disadvantages mentioned.

The polymer composition according to the invention is characterized in that said chlorinated polyethylene has a chlorine content of 32—40% by weight and a DSC crystallinity of 0—7%.

Surprisingly it has been found that such a polymer composition, in which no graft copolymer is incorporated, but which does incorporate a specific chlorinated polyethylene, does not only have a good flow behaviour and UV stability but also a very good impact resistance (even at low temperature). The flow behaviour of the polymer composition is, according to applicant's measurements, comparable with the flow behaviour of styrene-acrylonitrile copolymers.

Particularly the high impact resistance is surprising, because polymer compositions based on a copolymer of an unsaturated nitrile and chlorinated polyethylene, respectively based on this copolymer and a largely saturated rubber or based on the three components mentioned, but with a chlorinated polyethylene which does not meet the requirements in respect of chlorine content, crystallinity and/or glass transition temperature, show virtually no impact resistance.

An extra advantage of the polymer composition according to the invention is that the ratio between rubber, chlorinated polyethylene and copolymer of an unsaturated nitrile can be varied within wide limits. This means that there is very great freedom in the making of polymer compositions with a wide range of properties, such as stiffness, heat deflection temperature (Vicat, HDT), impact strength, burning characteristics, gloss, mould shrinkage, flow behaviour and deformability of the eventual mixtures, without having to interfere in the preparation of one of the components, as is the case with the known products based on a graft copolymer.

As rubberlike, largely saturated polymers, rubbers are suitable which have, in the main chain, no or little unsaturation, that is, fewer than 2 and preferably fewer than 1.5 double bonds per 100 carbon atoms. In the side chains, on the other hand, the rubbers may have unsaturation, which can be used, for instance, for crosslinking.

As a largely saturated rubber all rubbers showing little or no unsaturation in the main chain can be used. Examples of these rubbers are the rubbers based upon ethylene copolymers such as ethylene-

2

propylene rubbers, EPT-rubbers, hydrogenated polybutadiene rubber, acrylate rubber, butylrubber and chloro-butyl-rubber.

Rubbers which are particularly suitable to be used according to the method of the invention are ethylene-propylene copolymers (the so-called EP rubbers), butyl rubber and ethylene-propylene copolymers together with which other polyunsaturated monomers have been copolymerized also (the so-called EPT rubbers), or mixtures of two or more of these rubbers. Examples of these polyunsaturated monomers include hexadiene-1,4, dicyclopentadiene, tricyclopentadiene, 5-vinylnorbornene-2, 5-ethylidene-norbornene-2, 5-methylene-norbornene-2, 5-(2-propenyl)norbornene-2, 5-(5-hexenyl)-norbornene-2, 4,7,8,9-tetrahydro-indene and isopropylidene tetrahydro-indene.

As it is not essential for the polymer composition to be vulcanized, the use of polyunsaturated monomers is not necessary. It may, therefore, for economic reasons, be advantageous to use ethylene-propylene rubber in the polymer composition.

In certain cases it may be advantageous to cross-link the rubber wholly or partly. This can be effected in the usual manner. For instance by peroxides or by using chemically modified rubber.

The chlorinated polyethylene or a mixture of two or more chlorinated polyethylenes suitable for application in the polymer composition according to the invention can be made as known in the art by chlorinating polyethylene in gas phase, solution, or suspension. For this purpose see, for instance, the Dutch patent applications 7311780 and 7701599 laid open to public inspection. In this process high density polyethylene is preferably started from, that is polyethylene with a density of between 935 and 965 kg/m$^3$, and which may have been made by means of a catalyst based on transition metals.

In addition, the chlorinated polyethylene preferably has a crystallinity (measured with Differential Scanning Calorimeter (DSC)) of 0.7%.

The crystallinity is determined by first keeping a sample in a 'differential scanning calorimeter', at +150°C for 5 minutes, subsequently cooling it off to +50°C at a cooling rate of 5°C per minute and heating it up again to +150°C at a rate of 5°C per minute. During this heating-up the melting heat is measured. The crystallinity is determined by means of the following formula:

$$\text{Crystallinity (\%)} = \frac{\text{melting heat measured (J/g)}}{\text{theoretical melting heat of 100\% crystalline (J/g)}} \times 100\%$$

With such chlorinated polyethylenes the glass transition temperature will be lower than −15°C.

Glass transition temperature is, in this connection, understood to mean the temperature at which the loss modulus G″ which is measured with a torsion damping meter at a frequency of 0.2153 Hz and a heating-up rate of 1°C per minute, pertains a maximum, and in the vicinity of which the storage modulus G′, shows a transition from a value characteristic for a glass state to a value characteristic for a rubbery state.

In this connection it should be noted, however, that chlorinated polyethylene mostly has two transition temperatures. One temperature is generally in the neighbourhood of −120°C and does not vary in dependence of the nature of the chlorinated polyethylene. The other transition temperature is at a higher value and varies according to the manner in which the chlorinated polyethylene has been prepared. The latter transition temperature is generally referred to in literature when the glass transition temperature of chlorinated polyethylene is referred to. It is, therefore, this latter temperature which is referred to, in the present application, as glass transition temperature of chlorinated polyethylene.

By the specific choice of the combination of chlorine content and DSC crystallinity, a chlorinated polyethylene is obtained providing in the polymer combination with copolymer and rubber, in certain ratios, a surprisingly high impact resistance combined with a good modulus of elasticity and a good flow behaviour.

The preparation of the copolymer of an unsaturated nitrile can be effected continuously or batchwise, while known polymerization techniques such as emulsion, suspension, solution and mass polymerization, or combinations thereof, are suitable.

As copolymer the various copolymers based on acrylonitrile or derivatives thereof can be used.

Examples of applicable copolymers are styrene-acrylonitrile copolymer, α-methylstyrene-acrylonitrile copolymer, styrene- or α-methylstyrene-acrylonitrile-maleic anhydride terpolymer and styrene-α-methylstyrene-acrylonitrile polymer, as well as copolymers of acrylonitrile with halogenated styrene, or mixtures of two or more of the polymers mentioned.

The weight ratio between the chlorinated polyethylene and the rubber is, according to the invention, between 1:2 and 10:1. Within these limits a polymer composition is obtained which has a particularly good impact resistance, even at low temperature (−20°).

Optimum properties are achieved if the weight ratio of chlorinated polyethylene and largely saturated rubber is between 1:1 and 4:1.

Preference is given to a weight ratio of ethylene-propylene rubber and chlorinated polyethylene is between 1:1 and 1:3.

The polymer composition according to the invention can be made as known in the art from the various raw materials with application of methods customary for this purpose. Depending on the form

3

in which the raw materials are available (powder, crumb, liquid), various methods or combinations thereof can be used, such as an impeller mixer, Banbury mixer, mixing extruder, and the like.

As impact resistant polymer compositions are sold by the producers mainly in granulat form, the polymer composition will generally, after the mixture of the raw materials, be granulated by means of an extruder. In this extruder the mixing may be effected as well.

The polymer composition according to the invention preferably consists of:

a. 50—95% by weight of styrene-acrylonitrile copolymer and/or α-methylstyrene-acrylonitrile copolymer,

b.1 2.5—25% by weight of ethylene-propylene rubber or ethylene-propylene-diene rubber,

b.2 2.5—25% by weight of chlorinated polyethylene.

To the polymer composition the usual additive, such as antioxidants, antistatics, lubricants, fillers, colourants, pigments, UV-stabilizers, fungicides, etc. can be added.

The polymer composition according to the invention is particularly suitable for purposes in respect of which high standards are imposed in respect of the mechanical and physical properties, such as impact resistance, stiffness, etc., particularly if these properties must combine with UV resistance.

The polymer composition is suitable for many applications. Thus many impact resistant objects can be made from it, such as, for instance, pipes, bottles, furniture, dash boards for motor cars, cabinets and housings for electronic and domestic equipment, shoe heels, caravans, skis and surf boards.

Examples I up to and including V

Five polymer compositions were made from 75 parts by weight of styrene-acrylonitrile copolymer, 12.5 parts by weight of chlorinated polyethylene and 12.5 parts by weight of ethylene-propylene-ethylidene-norbornene rubber. The nitrogen content of the copolymer was 6.9% and the viscosity number was 0.64 dl/g (0.1 g in 100 ml acetone at +20°C). The EPT rubber applied had an ethylene content of 74% by weight, an ethylidene-norbornene content of 1.85% by weight and a Hoekstra plasticity of 53.

Table 1 successively gives the number of the example, the glass transition temperature $(T_g)$, crystallinity and the chlorine content of the chlorinated polyethylene, the impact resistance (Izod +23°C) and the bending modulus.

TABLE 1

| $T_g$ °C | Crystallinity (%) | Cl content (% by wt) | Izod (kJ/m²) | Bending modulus N/mm² |
|---|---|---|---|---|
| I—15 | 4 | 36 | 20 | 2280 |
| II—22 | 0 | 36 | 14.1 | 2320 |
| III*—15.5 | 3 | 30 | 8.9 | 2350 |
| IV*—25 | 0 | 28.6 | 6.2 | 2330 |
| V*—15 | 0 | 43 | 8.5 | 2340 |

*III, IV and V are comparative examples

Of the composition of Example I the Izod at −20°C is 5 kJ/m² and the HDT 86°C.

The above table clearly shows that polymer compositions with a crystallinity and a chlorine content within the limits of the invention have a very good impact resistance.

Examples VII up to and including XII

On the basis of 75 parts by weight of SAN[1] and 25 parts by weight of CPE[2] and/or EPT[3] a number of compositions were made which, as far as CPE and EPT are concerned, correspond with Example I.

Table 2 successively gives the quantities by weight of SAN, CPE and EPT, the impact resistance (Izod +23°C), the bending modulus and the maximum bending strength.

[1] SAN: styrene-acrylonitrile copolymer
[2] CPE: chlorinated polyethylene
[3] EPT: ethylene-propylene-diene rubber

# 0 037 608

TABLE 2

|  | SAN pts by wt | CPE pts by wt | EPT pts by wt | Izod (kJ/m²) | bending modulus (N/mm²) | max. bending strength N/mm² |
|---|---|---|---|---|---|---|
| VI* | 75 | 25 | — | 4.5 | 2330 | 81.0 |
| VII | 75 | 22.5 | 2.5 | 9.4 | 2350 | 78.6 |
| VIII | 75 | 20 | 5 | 27.3 | 2280 | 74.6 |
| IX | 75 | 17.5 | 7.5 | 26.7 | 2360 | 78.4 |
| I | 75 | 12.5 | 12.5 | 20 | 2280 | 76 |
| X* | 75 | 7.5 | 17.5 | 9.1 | 2060 | 66.1 |
| XI* | 75 | — | 25 | 2.3 | 1290 | 26.2 |

*VI, X, XI are comparative examples.

Examples XIII up to and including XVII

On the analogy of Table 2, Table 3 includes a number of polymer compositions, with this difference that the chlorinated polyethylene of Example II has been used.

TABLE 3

|  | SAN pts by wt | CPE pts by wt | EPT pts by wt | Izod (kJ/m²) | bending modulus (N/mm²) |
|---|---|---|---|---|---|
| XII* | 75 | 25 | — | 7.6 | 2460 |
| XIII | 75 | 22.5 | 2.5 | 10.4 | 2380 |
| XIV | 75 | 20 | 5 | 22.8 | 2340 |
| XVI | 75 | 17.5 | 7.5 | 24.4 | 2230 |
| II | 75 | 12.5 | 12.5 | 14.1 | 2320 |
| XVI* | 75 | 7.5 | 17.5 | 7.4 | 2080 |

*XII and XVI are comparative examples.

## Claims

1. Impact resistant polymer composition comprising
a. 50—95 parts by weight of one or more polymers obtained by the polymerization of 10—90% by weight of styrene and/or derivatives of styrene and 90—10% by weight of acrylonitrile and/or methacrylonitrile,
b. 5—50 parts by weight of,
b.1 a largely saturated rubber,
b.2 chlorinated polyethylene, while the weight ratio of rubber to chlorinated polyethylene is between 2:1 and 1:10, characterized in that, the chlorinated polyethylene has a chlorine content of between 32 and 40% by weight and a DSC crystallinity of 0—7%.

2. Polymer composition according to claim 1, characterized in that, as copolymer of an unsaturated nitrile, a copolymer of styrene and/or $\alpha$-methylstyrene with acrylonitrile is used.

3. Polymer composition according to claim 1 or 2, characterized in that, as saturated rubber, one or more rubbers from the group consisting of ethylene-propylene rubber and ethylene-propylene-diene rubber are chosen.

4. Polymer composition according to claims 1—3, characterized in that the weight ratio of ethylene-propylene rubber/chlorinated polyethylene is between 1:1 and 1:3.

5. Polymer composition according to claim 1, characterized in that it consists of
a. 50—95% by weight of styrene-acrylonitrile copolymer and/or $\alpha$-methylstyrene-acrylonitrile copolymer,

5

b.1 2.5—25% by weight of ethylene-propylene rubber or ethylene-propylene-diene rubber,
b.2 2.5—25% by weight of chlorinated polyethylene,
c. 0—10% by weight of additives.
6. Object made of a polymer composition according to any one of the claims 1—5.

## Patentansprüche

1. Schlagfeste Polymerzusammensetzung enthaltend
a. 5—95 Gewichtsteile eines oder mehrerer Polymerer, erhalten durch Polymerisation von 10—90 Gew.-% Styrol und/oder Derivaten von Styrol und 90—10 Gew.-% Acrylonitril und/oder Methacrylonitril
b. 5—50 Gewichtsteile
b.1 eines weitgehend gesättigten Kautschuks
b.2 chloriertes Polyäthylen, wobei das Gewichtsverhältnis von Kautschuk zu chloriertem Polyäthylen zwischen 2:1 und 1:10 beträgt, dadurch gekennzeichnet, daß das chlorierte Polyäthylen einen Chlorgehalt zwischen 32 und 40 Gew.-% und eine DSC-Kristallinität von 0—7% hat.
2. Polymerzusammensetzung nach Anspruch 1, dadurch gekennzeichnet, daß als Copolymeres eines ungesättigten Nitrils ein Copolymeres von Styrol und/oder $\alpha$-Methylstyrol mit Acrylonitril verwendet wird.
3. Polymerzusammensetzung nach Anspruch 1 oder 2, dadurch gekennzeichnet, daß als gesättigter Kautschuk ein oder mehrere Kautschuke aus der Gruppe Äthylen-Propylen-Kautshuk und Äthylen-Propylen-Dien-Kautschuk ausgewählt werden.
4. Polymerzusammensetzung nach Anspruch 1—3, dadurch gekennzeichnet, daß das Gewichtsverhältnis Äthylen-Propylen-Kautschuk/chloriertes Polyäthylen zwischen 1:1 und 1:3 beträgt.
5. Polymerzusammensetzung nach Anspruch 1, dadurch gekennzeichnet, daß sie besteht aus
a. 50—95 Gew.-% Styrol-Acrylonitril-Copolymerem und/oder $\alpha$-Methylstyrol-Acrylonitril-Copolymerem,
b.1 2,5—25 Gew.-% Äthylen-Propylen-Kautshuk und/oder Äthylen-Propylen-Dien-Kautschuk,
b.2 2,5—25 Gew.-% chloriertem Polyäthylen,
c. 0—10 Gew.-% Additiven.
6. Gegenstand, hergestellt aus einer Polymerzusammensetzung gemäß einem der Ansprüche 1—5.

## Revendications

1. Composition polymere resistant aux chocs comprenant
a. 50—95 parties en poids d'un ou plusieurs polymères obtenus par polymérisation de 10—90% en poids de styrène et/ou de derives de styrène et 90—10% en poids d'acrylonitrile et/ou de méthacrylonitrile
b. 5—50 parties en poids de
b.1 un caoutchouc largement saturé
b.2 polyéthylène chlore, tandis que le rapport ponderal du caoutchouc au polyéthylène chlore est compris entre 2:1 et 1:10, caractérisée en ce que le polyéthylène chloré a une teneur en chlore comprise entre 32 et 40% en poids et une cristallinite CBD de 0—7%.
2. Composition polymère selon la revendication 1, caractérisée en ce que, comme copolymère d'un nitrile non saturé, on utilise un copolymère de styrène et/ou d'$\alpha$-méthylstyrène avec de l'acrylonitrile.
3. Composition polymère selon les revendications 1 ou 2, caractérisée en ce que, comme caoutchouc saturé, on choisit un ou plusieurs caoutchoucs du groupe constitué par le caoutchouc éthylène-propylène et le caoutchouc éthylène-propylène-diène.
4. Composition polymère selon les revendications 1—3, caractérisée en ce que le rapport pondéral de caoutchouc éthylène-propylène/polyéthylène chlore est compris entre 1:1 et 1:3.
5. Composition polymère selon la revendication 1, caractérisée en ce qu'elle se compose de:
a. 50—95% en poids de copolymère styrène-acrylonitrile et/ou de copolymère $\alpha$-méthylstyrène-acrylonitrile,
b.1 2,5—25% en poids de caoutchouc éthylène-propylène ou de caoutchouc éthylène-propylène-diène,
b.2 2,5—25% en poids de polyéthylène chloré,
c. 0—10% en poids d'additifs.
6. Objet fabriqué d'une composition polymérique selon l'une quelconque des revendications 1—6.